(19) Europäisches Patentamt / European Patent Office / Office européen des brevets

(11) **EP 4 528 871 A1**

(12) **EUROPEAN PATENT APPLICATION**
published in accordance with Art. 153(4) EPC

(43) Date of publication:
26.03.2025 Bulletin 2025/13

(21) Application number: 22941874.4

(22) Date of filing: 19.05.2022

(51) International Patent Classification (IPC):
$H01M\ 10/0562^{(2010.01)}$  $H01M\ 4/13^{(2010.01)}$
$H01M\ 4/139^{(2010.01)}$  $H01M\ 4/62^{(2006.01)}$
$H01M\ 10/052^{(2010.01)}$

(52) Cooperative Patent Classification (CPC):
H01M 4/13; H01M 4/139; H01M 4/62;
H01M 10/052; H01M 10/0562; Y02E 60/10

(86) International application number:
PCT/IB2022/000285

(87) International publication number:
WO 2023/223064 (23.11.2023 Gazette 2023/47)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicants:
• NISSAN MOTOR CO., LTD.
Yokohama-shi, Kanagawa
221-0023 (JP)

• RENAULT S.A.S.
92100 Boulogne-Billancourt (FR)

(72) Inventors:
• SAITO, Naoto
Atsugi-shi, Kanagawa 243-0123 (JP)
• SAKAMOTO, Kazuyuki
Atsugi-shi, Kanagawa 243-0123 (JP)

(74) Representative: Grünecker Patent- und
Rechtsanwälte
PartG mbB
Leopoldstraße 4
80802 München (DE)

(54) **ALL-SOLID-STATE BATTERY**

(57) A means capable of improving the strength of a positive electrode active material layer while suppressing the decrease in energy density and energy output at a minimum in an all-solid state battery including a positive electrode active material layer containing a binder. A all-solid state battery including a power generating element including: a positive electrode including a positive electrode active material layer containing a positive electrode active material and a binder; a negative electrode; and a solid electrolyte layer containing a solid electrolyte and intervening the positive electrode and the negative electrode, wherein the orientation rate of the binder contained in the positive electrode active material layer for the direction perpendicular to the laminating direction of the power generating element is 60% or higher.

EP 4 528 871 A1

**Description**

**TECHNICAL FIELD**

The present invention relates to an all-solid state battery.

**BACKGROUND ART**

In recent years, in order to cope with global warming, reduction of the amount of carbon dioxide has been strongly desired. In the automobile industry, expectations have been focused on reduction of carbon dioxide emissions by introduction of electric vehicles (EVs) and hybrid electric vehicles (HEVs), and development of all-solid state batteries such as secondary batteries for motor drive, which are the key to practical application of these, has been actively conducted.
As the secondary battery for motor drive, it has been required to have extremely high output characteristics and high energy as compared with a lithium secondary battery for consumer use used in a mobile phone, a notebook computer, and the like. Therefore, a lithium secondary battery having the highest theoretical energy among all practical batteries has attracted attention, and is currently being rapidly developed.
Here, a lithium secondary battery that is currently widely used uses a combustible organic electrolyte solution as an electrolyte. In such a liquid lithium secondary battery, safety measures against liquid leakage, short circuit, overcharge, and the like are more strictly required than other batteries.
Therefore, in recent years, research and development on an all-solid state secondary battery using an oxide-based or sulfide-based solid electrolyte as an electrolyte have been actively conducted. The solid electrolyte is a material mainly composed of an ion conductor capable of ion conduction in a solid. Therefore, in the all-solid state secondary battery, various problems caused by a combustible organic electrolyte solution do not occur in principle unlike a conventional liquid lithium secondary battery. Also in general, when a positive electrode material having a high potential and a large capacity and a negative electrode material having a large capacity are used, significant improvement of the power density and the energy density of the battery can be attempted.
However, in the all-solid state secondary battery, it is known that a positive electrode active material layer constituting a part of the battery is relatively brittle and causes a failure such as a short circuit. On the other hand, for example, JP 2019-021459 A discloses a method for stably producing a positive electrode active material layer by including a binder in the positive electrode active material layer.

**SUMMARY OF INVENTION**

Technical Problem

However, as a result of the study by the present inventors, it has been found that in the positive electrode active material layer described in JP 2019-021459 A, the strength at an outer peripheral end of the positive electrode active material layer cannot be sufficiently improved. On the other hand, in order to sufficiently improve the strength, a problem has also been found that increasing the content of a binder in the positive electrode active material layer leads to a decrease in energy density and a decrease in energy output.
Therefore, an object of the present invention is to provide a means capable of improving the strength of a positive electrode active material layer while suppressing a decrease in energy density and a decrease in energy output at a minimum in an all-solid state battery including a positive electrode active material layer containing a binder.

Solution to Problem

The present inventors have conducted intensive studies in order to solve the above problems. As a result, the present inventors have found that the above problems are solved by setting an orientation rate of a binder contained in a positive electrode active material layer to a certain value or more, and have completed the present invention.
An all-solid state battery according to an embodiment of the present invention includes a power generating element including: a positive electrode including a positive electrode active material layer containing a positive electrode active material and a binder; a negative electrode; and a solid electrolyte layer containing a solid electrolyte and intervening the positive electrode and the negative electrode. Then, the all-solid state battery is characterized in that an orientation rate of the binder contained in the positive electrode active material layer for a direction perpendicular to a laminating direction of the power generating element is 60% or higher.

**BRIEF DESCRIPTION OF DRAWINGS**

Fig. 1 is a perspective view showing an appearance of a laminate type battery according to an embodiment of the present invention.

Fig. 2 is a cross-sectional view taken along line 2-2 shown in Fig. 1.

Fig. 3 is a schematic view showing an enlarged cross section of a single battery layer constituting the power generating element of the laminate type battery shown in Figs. 1 and 2.

Fig. 4 is a view for describing a method for calculating an aspect ratio of a binder.

Fig. 5 is a schematic view showing an example of a branched fibrous binder.

Fig. 6 is a view schematically showing an example of a forming step in an embodiment of a production method for producing a positive electrode active material layer.

**DESCRIPTION OF EMBODIMENTS**

An embodiment of the present invention is an all-solid state battery including a power generating element including: a positive electrode including a positive electrode active material layer containing a positive electrode active material and a binder; a negative electrode; and a solid electrolyte layer containing a solid electrolyte and intervening the positive electrode and the negative electrode, wherein an orientation rate of the binder contained in the positive electrode active material layer for a direction perpendicular to a laminating direction of the power generating element is 60% or higher. According to the present invention, it is possible to improve the strength of a positive electrode active material layer while suppressing a decrease in energy density and a decrease in energy output at a minimum in an all-solid state battery including a positive electrode active material layer containing a binder.

Hereinafter, the embodiment of the present invention described above will be described with reference to the drawings, but the technical scope of the present invention should be determined based on the description of the claims, and is not limited only to the following embodiments. Note that dimensional ratios in the drawings are exaggerated for convenience of description, and may be different from actual ratios. Hereinafter, the present invention will be described by exemplifying a non-bipolar type (internal parallel connection type) and flat-laminate type all-solid state secondary battery (hereinafter, also simply referred to as a "laminate type battery" or "all-solid state battery"), which is an embodiment of an all-solid state battery. As described above, the solid electrolyte constituting the all-solid state secondary battery is a material mainly composed of an ion conductor capable of ion conduction in a solid. Therefore, in the all-solid state secondary battery, there is an advantage that various problems caused by a combustible organic electrolyte solution do not occur in principle unlike a conventional liquid lithium secondary battery. Also in general, there is also an advantage that when a positive electrode material having a high potential and a large capacity and a negative electrode material having a large capacity are used, significant improvement of the power density and the energy density of the battery can be attempted.

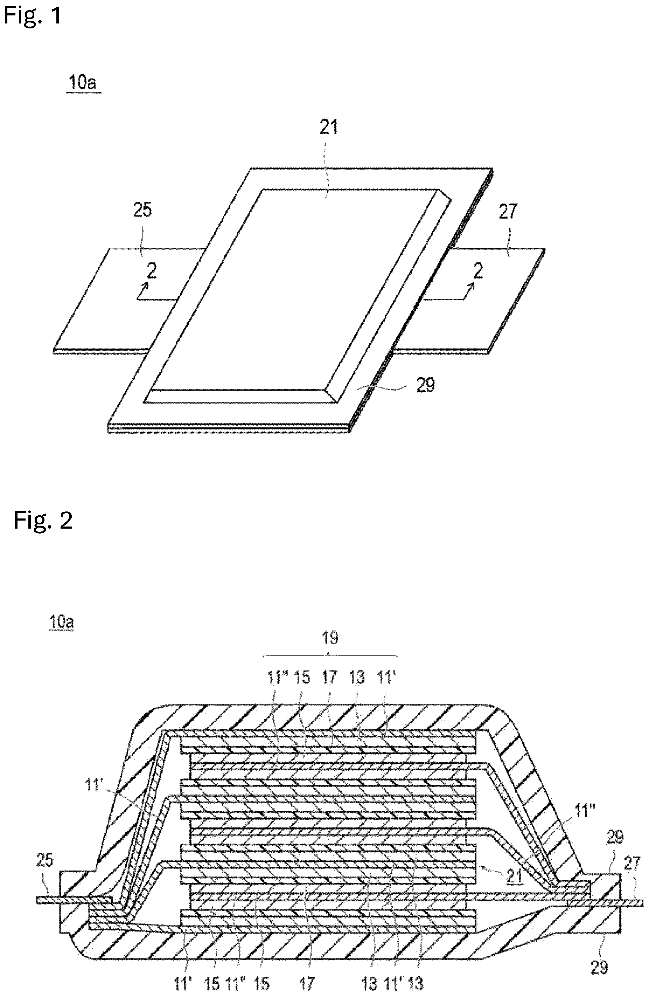

Fig. 1 is a perspective view showing an appearance of a laminate type battery according to an embodiment of the present invention. Fig. 2 is a cross-sectional view taken along line 2-2 shown in Fig. 1. By adopting the laminate type, the battery can be made compact and have a high capacity.

As shown in Fig. 1, the laminate type battery 10a has a rectangular flat shape, and a positive electrode current collecting plate 27 and a negative electrode current collecting plate 25 for extracting electric power are drawn out from both sides of the laminate type battery 10a. A power generating element 21 is wrapped with a battery outer casing material (laminate film 29) of the laminate type battery 10a, the periphery of the battery outer casing material (laminate film 29) is thermally fused, and the power generating element 21 is sealed in a state where the positive electrode current collecting plate 27 and the negative electrode current collecting plate 25 are drawn to the outside.

In addition, taking out of the current collecting plates (27, 25) shown in Fig. 1 is also not particularly limited. Taking out of the current collecting plates (27, 25) is not limited to that shown in Fig. 1., and for example, the positive electrode current collecting plate 27 and the negative electrode current collecting plate 25 may be drawn out from the same side, or the positive electrode current collecting plate 27 and the negative electrode current collecting plate 25 may be divided into a plurality of portions and taken out from the respective sides.

As shown in Fig. 2, the laminate type battery 10a of the present embodiment has a structure in which a flat and substantially rectangular power generating element 21 in which a charge-discharge reaction actually proceeds is sealed inside a laminate film 29, which is a battery outer casing material. Here, the power generating element 21 has a configuration in which a positive electrode, a solid electrolyte layer 17, and a negative electrode are laminated. The positive electrode has a structure in which a positive electrode active material layer 15 containing a positive electrode active material is disposed on both surfaces of a positive electrode current collector 11". The negative electrode has a structure in which a negative electrode active material layer 13 containing a negative electrode active material is disposed on both surfaces of a negative electrode current collector 11'. Specifically, the positive electrode, the solid electrolyte layer, and the negative electrode are laminated in this order such that one positive electrode active material layer 15 and a negative electrode active material layer 13 adjacent thereto face each other with a solid electrolyte layer 17 interposed therebetween. Thus, the adjacent positive electrode, solid electrolyte layer, and negative electrode constitute one single battery layer 19. Therefore, it can also be said that the laminate type battery 10a shown in Fig. 1 has a configuration in which a plurality of single battery layers 19 are laminated to be electrically connected in parallel.

To the positive electrode current collector 11" and the negative electrode current collector 11', a positive electrode current collecting plate (tab) 27 and a negative electrode current collecting plate (tab) 25 that are electrically connected to the respective electrodes (positive electrode and negative electrode) are respectively attached, and the positive electrode current collecting plate (tab) 27 and the negative electrode current collecting plate (tab) 25 have a structure in which the positive electrode current collecting plate (tab) 27 and the negative electrode current collecting plate (tab) 25 are led to the outside of the laminate film 29 so as to be sandwiched between ends of the laminate film 29, which is a battery outer casing material. The positive electrode current collecting plate 27 and the negative electrode current collecting plate 25 may be attached to the positive electrode current collector 11" and the negative electrode current collector 11' of each electrode by ultrasonic welding, resistance welding, or the like via a positive electrode lead and a negative electrode lead (not shown), respectively, as necessary.

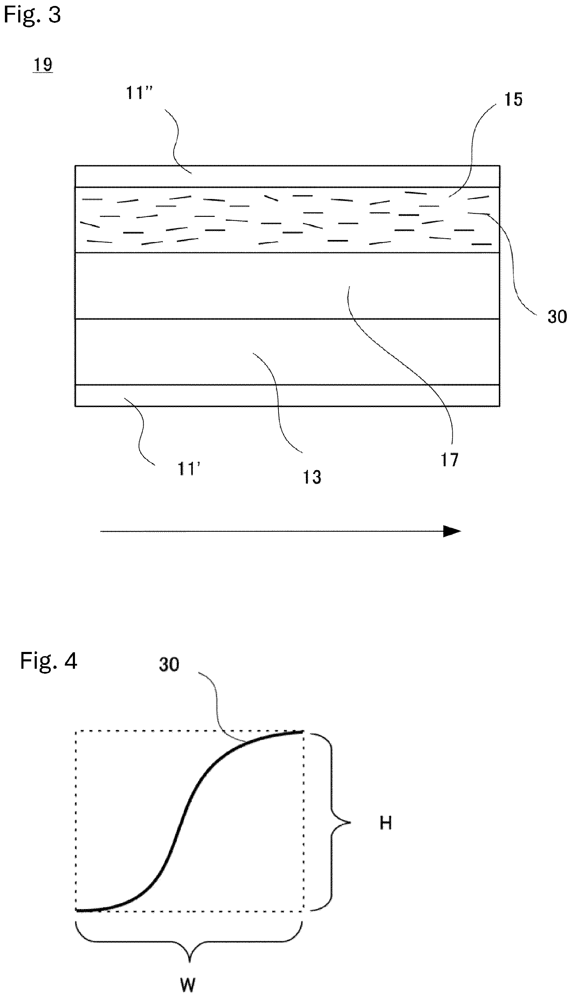

Fig. 3 is a schematic view showing an enlarged cross section of a single battery layer 19 constituting the power generating element 21 of the laminate type battery 10a shown in Figs. 1 and 2. As shown in Fig. 3, the single battery layer 19 according to the present embodiment is a laminate in which a negative electrode current collector 11', a negative electrode active material layer 13, a solid electrolyte layer 17, a positive electrode active material layer 15, and a positive electrode current collector 11" constituting the single battery layer 19 are laminated in this order. Then, the positive electrode active material layer 15 contains a binder 30, and in the binder, an orientation rate for a direction perpendicular to a laminating direction of the power generating element (arrow direction in the drawing) is 60% or higher. Incidentally, the details of the "orientation rate of the binder" will be described later.

Hereinafter, main constituent members of the all-solid state secondary battery according to the present embodiment will be described.

[Current collector]

The current collector has a function of mediating transfer of electrons from an electrode active material layer. The material constituting the current collector is not particularly limited. As the constituent material of the current collector, for example, a metal or a resin having conductivity can be adopted.

Specific examples of the metal include aluminum, nickel, iron, steel use stainless, titanium, copper, and the like. In addition to these, a clad material of nickel and aluminum, a clad material of copper and aluminum, or the like may be used. In addition, the metal may be a foil in which a metal surface is coated with aluminum. Among them, from the viewpoint of electron conductivity, battery operating potential, adhesion of the negative electrode active material by sputtering to the current collector, and the like, aluminum, steel use stainless, copper, and nickel are preferable.

In addition, examples of the resin having conductivity include, in addition to a conductive polymer material, a resin obtained by adding a conductive filler to a non-conductive polymer material.

The conductive filler can be used without particular limitation as long as it is a material having conductivity. Examples of materials excellent in conductivity, potential resistance, or lithium ion blocking property include a metal, conductive carbon, and the like.

Incidentally, the current collector may have a single-layer structure made of a single material, or may have a laminated structure in which layers made of these materials are appropriately combined. From the viewpoint of weight reduction of the current collector, it is preferable to include at least a conductive resin layer made of a resin having conductivity. In addition, from the viewpoint of blocking the movement of lithium ions between single battery layers, a metal layer may be provided on a part of the current collector.

[Positive electrode active material layer]

The positive electrode active material layer according to the present embodiment contains a positive electrode active material and a binder.

(Positive electrode active material)

The type of the positive electrode active material is not particularly limited, and examples thereof include layered rock salt type active materials such as $LiCoO_2$, $LiMnO_2$, $LiNiO_2$, $LiVO_2$, and $Li(Ni-Mn-Co)O_2$; spinel type active materials such as $LiMn_2O_4$ and $LiNi_{0.5}Mn_{1.5}O_4$; olivine type active materials such as $LiFePO_4$ and $LiMnPO_4$; Si-containing active

materials such as $Li_2FeSiO_4$ and $Li_2MnSiO_4$; and the like. In addition, examples of oxide active materials other than those described above include $Li_4Ti_5O_{12}$. Among them, a composite oxide containing lithium and nickel is preferably used, and $Li(Ni-Mn-Co)O_2$ and a composite oxide in which some of these transition metals are substituted with other elements (hereinafter, also simply referred to as "NMC composite oxide") are more preferably used. The NMC composite oxide has a layered crystal structure in which a lithium atomic layer and a transition metal (Mn, Ni, and Co are orderly arranged) atomic layer are alternately stacked with an oxygen atomic layer interposed therebetween, one Li atom is contained per atom of the transition metal M, the amount of Li that can be taken out is twice that of a spinel type lithium manganese oxide, that is, the supply capacity is twice that of the spinel type lithium manganese oxide, and the NMC composite oxide can have a high capacity.

As described above, the NMC composite oxide also includes a composite oxide in which some of transition metal elements are substituted with other metal elements. Examples of the other elements in this case include Ti, Zr, Nb, W, P, Al, Mg, V, Ca, Sr, Cr, Fe, B, Ga, In, Si, Mo, Y, Sn, V, Cu, Ag, Zn, and the like, and the other elements are preferably Ti, Zr, Nb, W, P, Al, Mg, V, Ca, Sr, and Cr, more preferably Ti, Zr, P, Al, Mg, and Cr, and from the viewpoint of improving cycle characteristics, further preferably Ti, Zr, Al, Mg, and Cr.

Furthermore, it is also one of preferred embodiments that a sulfur-based positive electrode active material is used. Examples of the sulfur-based positive electrode active material include particles or thin films of an organic sulfur compound or an inorganic sulfur compound, and any material may be used as long as it can release lithium ions during charge and occlude lithium ions during discharge by utilizing an oxidation-reduction reaction of sulfur.

In some cases, two or more types of positive electrode active materials may be used in combination. Incidentally, it is needless to say that a positive electrode active material other than the above may be used. The content of the positive electrode active material in the positive electrode active material layer is not particularly limited, and for example, is preferably within a range of 35 to 99% by mass, and more preferably within a range of 40 to 90% by mass.

(Binder)

The positive electrode active material layer according to the present embodiment contains a binder, and an orientation rate of the binder for a direction perpendicular to a laminating direction of the power generating element (also simply referred to as "surface direction") is 60% or higher. According to the all-solid state battery according to the present embodiment, since the orientation rate of the binder in the positive electrode active material layer is 60% or higher for the surface direction, it is possible to improve the strength of the positive electrode active material layer while suppressing a decrease in energy density and a decrease in output at a minimum.

Although the mechanism by which the above effect is exhibited is not completely clear, the following is estimated. That is, by disposing the binder so as to be oriented in the surface direction, even if an external force (for example, compressive stress or bending stress) from the laminating direction is applied to the positive electrode active material layer, an internal force resisting the external force can be generated, and as a result, the strength of the positive electrode active material layer becomes sufficient. Similarly, even when an external force (for example, tensile stress or shear stress) from the surface direction is applied to the positive electrode active material layer, by disposing the binder as described above, an internal force capable of resisting the external force can be generated, and as a result, the strength of the positive electrode active material layer becomes sufficient. Thus, it is considered that even when the all-solid state battery is repeatedly expanded and contracted by charge and discharge, the positive electrode active material layer is less likely to be cracked or collapsed due to an external force, and a decrease in output of the all-solid state battery can be prevented.

In addition, as a method for increasing the strength of the positive electrode active material layer, it is conceivable to increase the content of the binder contained in the positive electrode active material layer, but in this case, the energy density of the all-solid state battery decreases. In the positive electrode active material layer according to the present embodiment, by disposing the binder so as to be oriented in the surface direction, sufficient strength can be maintained by the mechanism described above, and thus the content of the binder can be reduced. Thus, it is considered that this makes it possible to obtain an all-solid state battery in which sufficient strength is maintained and the energy density is high even when the content of the binder is small.

In the secondary battery according to the present embodiment, the orientation rate of the binder in the positive electrode active material layer can be calculated as follows.

First, the state of disposition of the binder in a cross section of the positive electrode active material layer parallel to the laminating direction of the power generating element is specified. The disposition state of the binder can be specified by observing the cross section by SEM-EDX and mapping an element specific to the binder. Incidentally, if the same result as that of SEM-EDX can be obtained, mapping of the binder in the cross section may be performed using AES (Auger electron spectroscopy), EPMA (electron probe microanalysis), or the like.

Subsequently, from the disposition state of respective binders in the cross section of the positive electrode active material layer, an average value of aspect ratios of the binders is calculated. The average value of the aspect ratios of the binders is calculated as follows. First, 100 or more binders are extracted from all binders included in an observation image of the cross section.

Subsequently, an aspect ratio of each of the extracted binders is calculated. Specifically, in the above observation image, as shown in Fig. 4, a rectangle (rectangle indicated by a broken line in Fig. 4) having a side parallel to the laminating direction of the power generating element (vertical side, H in Fig. 4) and a side perpendicular to the laminating direction of the power generating element (horizontal side, W in Fig. 4) is set so that the binder 30 is inscribed. Then, a value obtained by dividing the length of the horizontal side of the rectangle by the length of the vertical side is calculated as an aspect ratio $(1/\tan\theta)$. Then, an average value of the aspect ratios of the respective extracted binders is calculated and used as an average value $(1/\tan\theta)$ of the aspect ratios of the binders.

Subsequently, $\theta$ [°] is calculated from the calculated average value $(1/\tan\theta)$ of the aspect ratios. Subsequently, a value calculated from this $\theta$ value based on the following Formula 1 is taken as an orientation rate (%) of the binder in the positive electrode active material layer.

[Mathematical formula 1]

$$\text{Orientation rate (\%)} = (1 - \theta/90) \times 100 \quad \cdots \quad \text{(Formula 1)}$$

Incidentally, since it is considered that the binder is uniformly dispersed in the positive electrode active material layer, an orientation rate calculated by observing at least one cross section of the positive electrode active material layer can be taken as an orientation rate of the binder in the entire positive electrode active material layer.

The lower limit value of the orientation rate of the binder in the positive electrode active material layer according to the present embodiment is 60% or higher, and is preferably 65% or higher, more preferably 70% or higher, still more preferably 75% or higher, particularly preferably 80% or higher, and most preferably 85% or higher. When the value of the orientation rate of the binder is within this range, the strength of the positive electrode active material layer can be made more sufficient when an external force (for example, compressive stress or bending stress) is applied to the positive electrode active material layer from the laminating direction. In addition, it is preferable that the upper limit value of the orientation rate of the binder according to the present embodiment is 90% or lower. When the value of the orientation rate of the binder is within this range, the positive electrode active material layer can exert a sufficient internal force when an external force (for example, tensile stress or shear stress) is applied from a direction perpendicular to the laminating direction. That is, the orientation rate of the binder according to the present embodiment is preferably 60% or higher and 90% or lower, more preferably 65% or higher and 90% or lower, still more preferably 70% or higher and 90% or lower, yet more preferably 75% or higher and 90% or lower, particularly preferably 80% or higher and 90% or lower, and most preferably 85% or higher and 90% or lower.

The upper limit value of the content of the binder in the positive electrode active material layer according to the present embodiment is preferably 3.2% by mass or less, more preferably 3.1% by mass or less, and still more preferably 3.0% by mass or less, with respect to a total mass of the positive electrode active material layer. When the content of the binder is within this range, the energy density and the energy output of the all-solid state battery become sufficiently high. On the other hand, the lower limit value of the content of the binder in the positive electrode active material layer according to the present embodiment is preferably 0.6% by mass or more, more preferably 0.7% by mass or more, still more preferably 0.8% by mass or more, particularly preferably 1.0% by mass or more, and most preferably 1.5% by mass. When the content of the binder is within this range, the strength of the positive electrode active material layer can be made more sufficient. That is, the content of the binder in the positive electrode active material layer according to the present embodiment is preferably 0.6% by mass or more and 3.2% by mass or less, more preferably 0.7% by mass or more and 3.1% by mass or less, still more preferably 0.8% by mass or more and 3.0% by mass or less, particularly preferably 1.0% by mass or more and 3.0% by mass or less, and most preferably 1.5% by mass or more and 3.0% by mass or less, with respect to the total mass of the positive electrode active material layer.

The binder is not particularly limited, and examples thereof include the following materials.

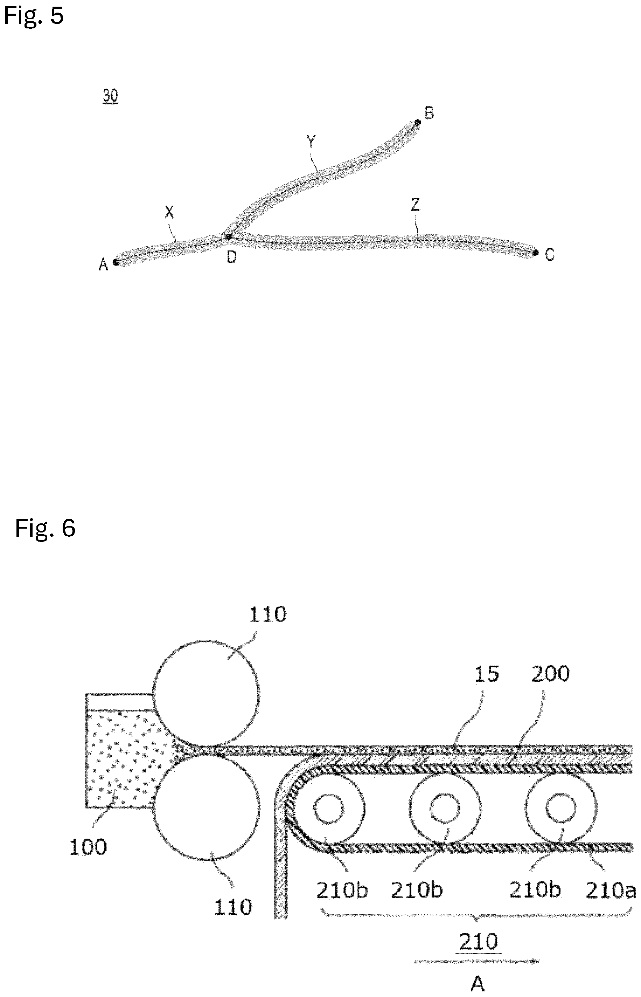

Thermoplastic polymers such as polybutylene terephthalate, polyethylene terephthalate, polyvinylidene fluoride (PVDF) (including a compound in which a hydrogen atom is substituted with another halogen element), polyethylene, polypropylene, polymethylpentene, polybutene, polyether nitrile, polytetrafluoroethylene, polyacrylonitrile, polyimide, polyamide, an ethylene-vinyl acetate copolymer, polyvinyl chloride, styrene-butadiene rubber (SBR), an ethylene-propylene-diene copolymer, a styrene-butadiene-styrene block copolymer and a hydrogenated product thereof, and a styrene-isoprene-styrene block copolymer and a hydrogenated product thereof; fluorine resins such as a tetrafluoroethylene-hexafluoropropylene copolymer (FEP), a tetrafluoroethylene-perfluoroalkylvinylether copolymer (PFA), an ethylene-tetrafluoroethylene copolymer (ETFE), polychlorotrifluoroethylene (PCTFE), an ethylene-chlorotrifluoroethylene copolymer (ECTFE), and polyvinyl fluoride (PVF); vinylidene fluoride-based fluorine rubbers such as vinylidene fluoride-hexafluoropropylene-based fluorine rubber (VDF-HFP-based fluorine rubber), vinylidene fluoride-hexafluoropropylene-tetrafluoroethylene-based fluorine rubber (VDF-HFP-TFE-based fluorine rubber), vinylidene fluoride-pentafluoropropylene-based fluorine rubber (VDF-PFP-based fluorine rubber), vinylidene fluoride-pentafluoropropylene-tetrafluoroethylene-based fluorine rubber (VDF-PFP-TFE-based fluorine rubber), vinylidene fluoride-perfluoromethyl vinyl ether-tetrafluoroethylene-based fluorine rubber (VDF-PFMVE-TFE-based fluorine rubber), and vinylidene fluoride-chlorotrifluoroethylene-based fluorine rubber (VDF-CTFE-based fluorine rubber); epoxy resins; and the like. Among them, from the viewpoint that the strength of the positive electrode active material layer can be made more sufficient by being entangled with other components, it is preferable that the binder includes a fibrous binder. In the present specification, the "fibrous binder" refers to a binder mainly composed of fibers in which an aspect ratio is 10 or more and a minimum Feret diameter is 0.2 $\mu$m or less in an observation image obtained when a cross section of the positive electrode active material layer is observed using a scanning electron microscope (SEM). Here, the aspect ratio is calculated by dividing the maximum Feret diameter of the binder by the minimum Feret diameter. Incidentally, the maximum Feret diameter is a maximum distance between two parallel straight lines when the outline of the binder is sandwiched between the straight lines, and the minimum Feret diameter is a minimum distance between two parallel straight lines when the outline of the binder is sandwiched between the straight lines. The phrase a certain binder is "mainly composed of" the above fibers means that an area ratio of the above fiber portion to a total area of the binder in an SEM observation image is 50% or more. One fibrous binder can include a portion other than fibers in which an aspect ratio is 10 or more and a minimum Feret diameter is 0.2 $\mu$m or less (a portion in which an aspect ratio is less than 10 or a portion in which a minimum Feret diameter is more than 0.2 $\mu$m). However, it is essential that the area ratio of the portion other than the fibers to the total area of the fibrous binder in an SEM observation image is less than 50%, and is preferably 20% or less, more preferably 10% or less, and still more preferably 5% or less (the lower limit value is 0%). The fibrous binder includes not only those composed of only one fiber but also those having a configuration in which two or more fibers are connected to each other. Specific examples of the shape of the binder having a configuration in which two or more fibers are connected to each other include a branched shape, a radial shape, a mesh shape, and a shape obtained by combining these shapes. Here, a method for determining the maximum Feret diameter and the minimum Feret diameter in a binder having a configuration in which two or more fibers are connected to each other will be described. Fig. 5 is a schematic view showing an example of a branched fibrous binder. The binder 30 shown in Fig. 5 has a configuration in which fiber X, fiber Y, and fiber Z are connected to each other. Each broken line represents a line connecting the center (1/2 width) of the width of a fiber, and point A, point B, and point C represent ends of each broken line. Incidentally, the ends of each broken line coincide with the ends of the fiber. Point D represents an intersection of three broken lines. That is, the binder 30 shown in Fig. 5 can also be said to have a shape in which fiber X from point A to point D, fiber Y from point B to point D, and fiber Z from point C to point D are bonded at point D. The maximum Feret diameter of fiber X in the binder 30 shown in Figure 5 is defined as a distance from point A to point D. Similarly, the maximum Feret diameter of fiber Y is a distance from point B to point D, and the maximum Feret diameter of fiber Z is a distance from point C to point D. In addition, the minimum Feret diameter of fiber X is a minimum distance between two parallel straight lines when the outline of the binder (fiber) between point A and point D is sandwiched between the straight lines. The same applies to the minimum Feret diameter of fiber Y and fiber Z. In the binder 30 shown in Fig. 5, fiber Y and fiber Z are fibers in which an aspect ratio is 10 or more and a minimum Feret diameter is 0.2 $\mu$m or less, but in fiber X, an aspect ratio is less than 10. However, since the area of the fiber X portion in the total area of the binder 30 is less than 50%, it can be said that the binder shown in Fig. 5 is a fibrous binder. The type of the fibrous binder is not particularly limited as long as it has the above shape in the positive electrode active material layer, and a binder that is fibrillated by applying a shear force can be suitably used. As the type of the binder capable of being fibrillated, polytetrafluoroethylene (PTFE), carboxymethyl cellulose, polyvinyl alcohol, polyethylene, nanofibers such as cellulose nanofibers, and Kevlar (registered trademark, polyparaphenylene terephthalamide) fibers are preferable, and polytetrafluoroethylene (PTFE) is more preferable. Regarding the fibrous binder, only one type may be used alone, or two or more types may be used in combination. Incidentally, in the present specification, the description of a compound name for a binder can include not only the compound indicated by the compound name but also a form in which a part of a terminal or side chain is substituted (modified) with another substituent. In the case of the form in which a part of a terminal or side chain is substituted (modified) with another substituent, the proportion of a structural unit in which a terminal or side chain is substituted (modified) with another substituent with respect to 100 mol% of all structural units is preferably 10 mol% or less, and more preferably 5 mol% or less.

The length of the fibrous binder is preferably 5 to 50 $\mu$m, and more preferably 8 to 15 $\mu$m. In addition, the diameter of the fibrous binder is preferably 20 to 500 nm, and more preferably 50 to 200 nm. By setting the size of the binder within such a range, the strength of the positive electrode active material layer becomes more sufficient. Incidentally, the length and the diameter of the fibrous binder can be an average value of several to several tens measured using a transmission electron microscope (TEM), a scanning electron microscope (SEM), or the like.


(Solid electrolyte)


It is preferable that the positive electrode active material layer further contains a solid electrolyte. When the positive electrode active material layer contains a solid electrolyte, it is possible to improve the ion conductivity of the positive electrode active material layer. Examples of the solid electrolyte include a sulfide solid electrolyte and an oxide solid electrolyte, and it is preferable to contain a sulfide solid electrolyte from the viewpoint of high ion conductivity.

Incidentally, in the present specification, the solid electrolyte refers to a material mainly composed of an ion conductor capable of ion conduction in a solid, and particularly refers to a material in which lithium ion conductivity at normal temperature (25°C) is $1 \times 10^{-5}$ S/cm or more, and the lithium ion conductivity is preferably $1 \times 10^{-4}$ S/cm or more. Here, the value of the ion conductivity can be measured by an AC impedance method.

Examples of the sulfide solid electrolyte include LiI-$Li_2S$-$SiS_2$, LiI-$Li_2S$-$P_2O_5$, LiI-$Li_3PO_4$-$P_2S_5$, $Li_2S$-$P_2S_5$, LiI-$Li_3PS_4$, LiI-LiBr-$Li_3PS_4$, $Li_3PS_4$, $Li_2S$-$P_2S_5$-LiI, $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (wherein m and n are positive numbers, and Z is any of Ge, Zn, and Ga), $Li_2S$-$GeS_2$, $Li_2S$-$SiS_2$-$Li_3PO_4$, $Li_2S$-$SiS_2$-$Li_xMO_y$ (wherein x and y are positive numbers, and M is any of P, Si, Ge, B, Al, Ga, and In), and the like. Incidentally, the description of "$Li_2S$-$P_2S_5$" means a sulfide solid electrolyte obtained using a raw material composition containing $Li_2S$ and $P_2S_5$, and the same applies to other descriptions.

The sulfide solid electrolyte may have, for example, a $Li_3PS_4$ skeleton, may have a $Li_4P_2S_7$ skeleton, or may have a $Li_4P_2S_6$ skeleton. Examples of the sulfide solid electrolyte having a $Li_3PS_4$ skeleton include LiI-$Li_3PS_4$, LiI-LiBr-$Li_3PS_4$, and $Li_3PS_4$. In addition, examples of the sulfide solid electrolyte having a $Li_4P_2S_7$ skeleton include a Li-P-S-based solid electrolyte called LPS (for example, $Li_7P_3S_{11}$). In addition, as the sulfide solid electrolyte, for example, LGPS represented by $Li_{(4-x)}Ge_{(1-x)}P_xS_4$ (x satisfies $0 < x < 1$) or the like may be used. Among them, the sulfide solid electrolyte is preferably a sulfide solid electrolyte containing a P element, and the sulfide solid electrolyte is more preferably a material containing $Li_2S$-$P_2S_5$ as a main component. Furthermore, the sulfide solid electrolyte may contain halogen (F, Cl, Br, I). In a preferred embodiment, the sulfide solid electrolyte includes $Li_6PS_5X$ (wherein X is Cl, Br, or I, preferably Cl).

In addition, when the sulfide solid electrolyte is $Li_2S$-$P_2S_5$-based, the ratio of $Li_2S$ and $P_2S_5$ as a molar ratio is preferably within a range of $Li_2S$ : $P_2S_5$ = 50 : 50 to 100 : 0, and particularly preferably $Li_2S$ : $P_2S_5$ = 70 : 30 to 80 : 20.

In addition, the sulfide solid electrolyte may be sulfide glass, may be crystallized sulfide glass, or may be a crystalline material obtained by a solid phase method. Incidentally, the sulfide glass can be obtained, for example, by performing mechanical milling (ball milling or the like) on the raw material composition. In addition, the crystallized sulfide glass can be obtained, for example, by heat-treating the sulfide glass at a temperature equal to or higher than a crystallization temperature. In addition, the ion conductivity (for example, Li ion conductivity) of the sulfide solid electrolyte at normal temperature (25°C) is, for example, preferably $1 \times 10^{-5}$ S/cm or more, and more preferably $1 \times 10^{-4}$ S/cm or more. Incidentally, the value of the ion conductivity of the solid electrolyte can be measured by an AC impedance method.

Examples of the shape of the solid electrolyte include a particulate shape such as a perfect spherical shape and an elliptical spherical shape, a thin film shape, and the like. When the solid electrolyte has a particulate shape, the average particle diameter (D50) of the solid electrolyte is not particularly limited, and is preferably 40 $\mu$m or less, more preferably 20 $\mu$m or less, and still more preferably 10 $\mu$m or less. On the other hand, the average particle diameter (D50) is preferably 0.01 $\mu$m or more, and more preferably 0.1 $\mu$m or more.

The content of the solid electrolyte in the positive electrode active material layer is, for example, preferably within a range of 1 to 60% by mass, and more preferably within a range of 10 to 50% by mass.

(Conductive aid)

The positive electrode active material layer according to the present embodiment can contain a conductive aid. When the positive electrode active material layer contains a conductive aid, an electronic network inside the positive electrode active material layer is effectively formed, which can contribute to improvement of output characteristics of the battery. Examples of the conductive aid include, but are not limited to, metals such as aluminum, steel use stainless (SUS), silver, gold, copper, and titanium, alloys containing these metals, or metal oxides; and carbon such as carbon fibers (specifically, vapor grown carbon fibers (VGCFs), polyacrylonitrile-based carbon fibers, pitch-based carbon fibers, rayon-based carbon fibers, activated carbon fibers, and the like), carbon nanotubes (CNTs), and carbon black (specifically, acetylene black, Ketjen black (registered trademark), furnace black, channel black, thermal lamp black, and the like). In addition, a material obtained by coating a periphery of a particulate ceramic material or resin material with the above metal material by plating or the like can also be used as a conductive aid. Among these conductive aids, from the viewpoint of electrical stability, it is preferable to contain at least one selected from the group consisting of aluminum, steel use stainless, silver, gold, copper, titanium, and carbon, it is more preferable to contain at least one selected from the group consisting of aluminum, steel use stainless, silver, gold, and carbon, and it is still more preferable to contain at least one carbon. Regarding these conductive aids, only one type may be used alone, or two or more types may be used in combination. The electron conductivity of the conductive aid is preferably 1 S/m or more, more preferably $1 \times 10^2$ S/m or more, still more preferably $1 \times 10^4$ S/m or more, and yet more preferably $1 \times 10^5$ S/m or more. The upper limit value of the electron conductivity of the conductive aid is not particularly limited, and is usually $1 \times 10^7$ S/m or less.

The shape of the conductive aid is not particularly limited, and is preferably a fibrous shape or a flat shape, and more preferably a fibrous shape. When the conductive aid has these shapes, the strength of the positive electrode active material layer becomes sufficient, and particularly when the shape of the conductive aid is a fibrous shape, the conductive aid is entangled with other components of the positive electrode active material layer, so that the strength of the positive electrode active material layer becomes more sufficient.

Examples of the fibrous conductive aid include carbon fibers such as PAN-based carbon fibers and pitch-based carbon fibers; conductive fibers obtained by uniformly dispersing a highly conductive metal or graphite in synthetic fibers; metal fibers obtained by fiberizing a metal such as stainless steel; conductive fibers obtained by coating a surface of organic fibers with a metal; conductive fibers obtained by coating a surface of organic fibers with a resin containing a conductive material; and the like. Among them, carbon fibers are preferable because they are excellent in conductivity and lightweight.

When the conductive aid is fibrous, the length thereof is preferably 5 to 20 $\mu$m, and more preferably 8 to 15 $\mu$m. In addition, when the conductive aid is fibrous, the diameter of the conductive aid is preferably 20 to 500 nm, and more preferably 50 to 300 nm. By setting the size of the conductive aid within such a range, the strength of the positive electrode active material layer becomes more sufficient. Incidentally, the length and the diameter of the fibrous conductive aid can be an average value of several to several tens measured using a transmission electron microscope (TEM), a scanning electron microscope (SEM), or the like.

The shape of the conductive aid may be a particulate shape in addition to a fibrous shape, and the shape of the particle is not particularly limited, and may be any shape such as a powder shape, a spherical shape, a rod shape, a needle shape, a plate shape, a columnar shape, an irregular shape, a scaly shape, and a spindle shape. The average particle diameter (primary particle diameter) when the conductive aid has a particulate shape is not particularly limited, and is preferably 0.01 to 10 $\mu$m from the viewpoint of electrical characteristics of the battery. Incidentally, in the present specification, the "particle diameter of the conductive aid" means the maximum distance L of the distances between any two points on the outline of the conductive aid. As the value of the "average particle diameter of the conductive aid", a value calculated as an average value of particle diameters of particles observed in several to several tens of visual fields using an observation means such as a scanning electron microscope (SEM) or a transmission electron microscope (TEM) shall be adopted.

When the positive electrode active material layer contains a conductive aid, the content of the conductive aid in the positive electrode active material layer is not particularly limited, and is preferably 0 to 10% by mass, more preferably 1.0 to 8% by mass, and still more preferably 2.0 to 5.0% by mass, with respect to a total mass of the positive electrode active material layer. Within such a range, it becomes possible to form a stronger electron conduction path in the positive electrode active material layer, and it is possible to effectively contribute to improvement of battery characteristics.

The lower limit value of an orientation rate of the conductive aid in the positive electrode active material layer according to the present embodiment for a direction perpendicular to a laminating direction of the power generating element (surface direction) is preferably 55% or higher, more preferably 60% or higher, still more preferably 65% or higher, and particularly preferably 70% or higher for the surface direction. When the orientation rate of the conductive aid is within the above range, the strength of the positive electrode active material layer can be made more sufficient. In addition, it is preferable that the upper limit value of the orientation rate of the conductive aid according to the present embodiment is 90% or lower. When the upper limit of the orientation rate of the conductive aid is within this range, the positive electrode active material layer can exert a sufficient internal force when an external force (for example, tensile stress or shear stress) is applied to the positive electrode active material layer from the surface direction. That is, the orientation rate of the conductive aid according to the present embodiment is preferably 55% or higher and 90% or lower, more preferably 60% or higher and 90% or lower, still more preferably 65% or higher and 90% or lower, and particularly preferably 70% or higher and 90% or lower. Incidentally, the orientation rate of the conductive aid is calculated using the same method as for the orientation rate of the binder described above.

The thickness of the positive electrode active material layer varies depending on the configuration of the intended all-solid state battery, and is, for example, preferably within a range of 0.1 to 1000 $\mu$m, and more preferably 40 to 100 $\mu$m.

[Solid electrolyte layer]

The solid electrolyte layer is a layer containing a solid electrolyte as a main component and intervening the negative electrode active material layer and the positive electrode active material layer. Since a specific form of the solid electrolyte contained in the solid electrolyte layer is the same as that described above, the detailed description thereof is omitted here.

The content of the solid electrolyte in the solid electrolyte layer is, for example, preferably within a range of 10 to 100% by mass, more preferably within a range of 50 to 100% by mass, and still more preferably within a range of 90 to 100% by mass.

The solid electrolyte layer may further contain a binder in addition to the solid electrolyte described above. Since a specific form of the binder that can be contained in the solid electrolyte layer is the same as that described above, the detailed description thereof is omitted here.

The thickness of the solid electrolyte layer varies depending on the configuration of the intended all-solid state battery, and is preferably 600 $\mu$m or less, more preferably 500 $\mu$m or less, and still more preferably 400 $\mu$m or less from the viewpoint that the volume energy density of the battery can be improved. On the other hand, the lower limit value of the thickness of the solid electrolyte layer is not particularly limited, and is preferably 1 $\mu$m or more, more preferably 5 $\mu$m or more, and still more preferably 10 $\mu$m or more.

[Negative electrode active material layer]

The negative electrode active material layer contains a negative electrode active material. The type of the negative electrode active material is not particularly limited, and examples thereof include a carbon material, a metal oxide, and a metal active material. In addition, as the negative electrode active material, a metal containing lithium may be used. Such a negative electrode active material is not particularly limited as long as it is an active material containing lithium, and examples thereof include a lithium-containing alloy in addition to metal lithium. Examples of the lithium-containing alloy include an alloy of Li and at least one of In, Al, Si, Sn, Mg, Au, Ag, and Zn. The negative electrode active material preferably contains metal lithium or a lithium-containing alloy, a silicon-based negative electrode active material, or a tin-based negative electrode active material, and particularly preferably contains metal lithium or a lithium-containing alloy. Incidentally, when the negative electrode active material uses metal lithium or a lithium-containing alloy, the all-solid state battery according to the present embodiment can be a so-called lithium deposition type in which lithium metal as a negative electrode active material is deposited on a negative electrode current collector in a charging process. Therefore, in such a form, the thickness of the negative electrode active material layer increases with the progress of a charging process, and the thickness of the negative electrode active material layer decreases with the progress of a discharging process. The negative electrode active material layer may not be present at the time of complete discharge, and in some cases, a negative electrode active material layer made of a certain amount of lithium metal may be disposed at the time of complete discharge.

On the other hand, when the all-solid state battery is not of a lithium deposition type, it is preferable that the negative electrode active material layer further contains a solid electrolyte, a binder, and a conductive aid in addition to the negative electrode active material, similarly to the positive electrode active material layer described above. Specific examples and preferred forms of these materials are as described above in the section of the positive electrode active material layer.

The content of the negative electrode active material in the negative electrode active material layer is not particularly limited, and for example, is preferably within a range of 40 to 99% by mass, and more preferably within a range of 50 to 90% by mass.

[Positive electrode lead and negative electrode lead]

In addition, although not shown, the current collectors and the current collecting plates may be electrically connected via a positive electrode lead or a negative electrode lead. As the constituent material of the positive electrode and negative electrode leads, a material used in a known lithium ion secondary battery can be similarly adopted. Incidentally, it is preferable that a portion taken out from an outer casing is covered with a heat resistant and insulating heat shrinkable tube or the like so as not to affect a product (for example, automotive components, in particular electronic devices, and the like) due to electric leakage or the like caused by contact with peripheral equipment, wiring, or the like.

[Battery outer casing material]

As the battery outer casing material, a known metal can case can be used, and a bag-shaped case using a laminate film containing aluminum, which can cover a power generating element as shown in Figs. 1 and 2, can be used.

Although an embodiment of the all-solid state battery has been described above, the present invention is not limited to only the configuration described in the above-described embodiment, and can be appropriately changed based on the description of the claims.

For example, in the all-solid state battery according to the present embodiment, the solid electrolyte layer may further contain a conventionally known liquid electrolyte (electrolyte solution). The amount of the liquid electrolyte (electrolyte solution) that can be contained in the solid electrolyte layer is not particularly limited, and is preferably such an amount that the shape of the solid electrolyte layer formed by the solid electrolyte is maintained and liquid leakage of the liquid electrolyte (electrolyte solution) does not occur.

[Method for producing all-solid state battery (positive electrode active material layer)]

The method for producing the all-solid state battery according to the present embodiment is not particularly limited. Here, an example of a method for producing a positive electrode active material layer, which is a characteristic configuration of the all-solid state battery according to the present embodiment, will be described. In the production method, first, a powder composition (positive electrode mixture) containing a positive electrode active material and a binder, and as necessary, a solid electrolyte and a conductive aid is prepared. Next, this powder composition (positive electrode mixture) is subjected to a rolling treatment by a roll press machine to produce a positive electrode active material layer. That is, according to another embodiment of the present invention, a method for producing a positive electrode active material layer for use in the all-solid state battery according to an embodiment of the present invention is also provided. This production method is characterized by including a forming step of supplying a powder composition (positive electrode mixture) containing a positive electrode active material and a binder (and a solid electrolyte and a conductive aid as necessary) to a roll press machine, and performing a roll rolling treatment twice or more on the powder composition using the roll press machine to form the powder composition into a sheet shape, thus obtaining the positive electrode active material layer.

Incidentally, in the present specification, the "roll press machine" is a machine including at least a pair of cylindrical pressure rolls disposed in parallel with each other with outer peripheral surfaces facing each other, and a rotation drive mechanism of the above rolls, in which the above-described powder composition (positive electrode mixture) is sandwiched between the above pair of rolls and rolled into a sheet shape. The material and size of the roll, the manner of the rotation mechanism, the disposition of the above roll and the above rotation mechanism, and the like are not particularly limited. In addition, the direction in which the positive electrode active material layer is discharged from between the above pair of rolls is not particularly limited, and may be a horizontal direction or a downward direction.

Here, first, a powder composition (electrode mixture) used as a raw material in the above-described production method will be described. This powder composition essentially contains a positive electrode active material and a binder, and preferably further contains a solid electrolyte and a conductive aid. The "powder composition" means a mixture composed of a solid content in a state of substantially not containing a liquid component such as a solvent. Incidentally, the content of the liquid component in the powder composition is preferably 5% by mass or less, more preferably 3% by mass or less, still more preferably 1% by mass or less, yet more preferably 0.5% by mass or less, particularly preferably 0.1% by mass or less, and most preferably 0% by mass, with respect to 100% by mass of the powder composition.

The method for obtaining the powder composition is not particularly limited, and respective components constituting the powder composition may be added in any order and mixed. The mixing means at this time is not particularly limited, and a method using a mixing means such as a conventionally known mortar, mixer, or mill can be appropriately adopted. Here, the method for blending a binder into the powder mixture is not particularly limited, and a binder may be separately prepared and mixed with other components. In addition, when it is desired to contain a fibrous binder in the powder mixture, a fibrous binder may be generated in the powder composition by, when a binder capable of being fibrillated, which is a precursor of a fibrous binder, is mixed with other components, applying a shear force to the binder capable of being fibrillated to be fibrillated.

In the production method according to the present embodiment, a powder composition (positive electrode mixture) containing a positive electrode active material and a binder (and a solid electrolyte and a conductive aid as necessary) is supplied to a roll press machine, and a rolling treatment is performed on the powder composition using the roll press machine to form the powder composition into a sheet shape. At this time, a roll rolling treatment is performed twice or more on the powder composition using the roll press machine to form the powder composition into a sheet shape.

Fig. 6 is a view schematically showing an example of a forming step in an embodiment of a production method for producing a positive electrode active material layer 15. As shown in Fig. 6, in the forming step of the production method according to the present embodiment, a powder composition (positive electrode mixture) 100 is supplied to a roll press machine, and using the roll press machine (specifically, by compressing by a roll 110 of the roll press machine), a rolling treatment is performed on the powder composition (positive electrode mixture) 100 to form the powder composition (positive electrode mixture) into a sheet shape. The powder composition (positive electrode mixture) 100 formed into a sheet shape becomes a positive electrode active material layer 15, and is discharged in the horizontal direction and then laminated on a surface of a base material 200. Incidentally, the direction in which the powder composition (positive electrode mixture) formed into a sheet shape in the forming step is discharged is not particularly limited, and the positive electrode active material layer may be discharged, for example, in a vertical direction.

The base material 200 may be moved in one direction according to a speed at which the powder composition (positive electrode mixture) 100 is formed. The means for moving the base material 200 in one direction is not particularly limited, and as shown in Fig. 6, the base material 200 may be moved in one direction (direction indicated by arrow A in Fig. 6) by a base material conveyance unit 210 including a placement portion 210a and a drive portion 210b. In addition, when the base material 200 itself has sufficient mechanical strength, the base material 200 may be moved in one direction by a method such as directly disposing the base material 20 on the drive portion 210b without providing the placement portion 210a.

In the production method, a roll rolling treatment is performed twice or more on the powder composition using the roll press machine to form the powder composition into a sheet shape. At this time, by appropriately adjusting conditions such as the linear pressure of the roll press machine, the number of times of the rolling treatment, and the rotation speed of the roll, the positive electrode active material layer for use in the all-solid state battery according to an embodiment of the present invention is obtained.

The number of times of performing the rolling treatment on the powder composition using the roll press machine is not unambiguously defined, but is preferably 4 to 10 and more preferably 5 to 6. By setting the number of times of performing the rolling treatment within the above range, the orientation rate of the binder (further, the conductive aid) can be easily set to a desired value.

It is preferable that the linear pressure applied to the powder composition by the roll press machine is 35 to 3500 N/cm. Incidentally, the linear pressure applied to the powder composition by the roll press machine means a linear pressure calculated from a load obtained by a load cell attached to the roll press machine and an electrode width after pressing. The interval between the rolls of the roll press machine is not particularly limited, and is preferably 100 to 1000 $\mu$m from the viewpoint of the linear pressure applied to the powder composition and from the viewpoint of adjusting the film thickness of the positive electrode active material layer. In addition, the rotation speed of the roll of the roll press machine is not particularly limited, and is preferably 1 to 20 m/min from the viewpoint of maintaining a sufficient press holding time.

According to the production method according to the present embodiment, since the positive electrode active material layer can be obtained by a simple operation of forming the powder composition containing a positive electrode active material with the roll press machine, forming errors are less likely to occur, and the yield is high. In addition, a shear force in a flow direction of the roll press can be applied to the binder contained in the powder composition during forming. As a result of performing such a rolling treatment a plurality of times, the binder (preferably the fibrous binder) having a random orientation in a state of the powder composition is oriented in a direction perpendicular to a laminating direction of the power generating element (surface direction).

The second and subsequent rolling treatments using the roll press machine may be performed, for example, by folding the positive electrode active material layer obtained by performing a rolling treatment once or more to form a laminate, and setting the gap between the rolls of the roll press machine so that the thickness becomes half or less of the thickness of the laminate. The method for folding the positive electrode active material layer is not particularly limited, and examples thereof include a two-fold folding, a three-fold folding, a four-fold folding, and the like.

Incidentally, the all-solid state battery having the positive electrode active material layer produced as described above is produced, for example, as follows. First, a positive electrode current collector, a positive electrode active material layer, a solid electrolyte layer, and a negative electrode current collector are laminated in this order, and bonded together by hydrostatic pressure or the like to obtain a power generating element. Next, a positive electrode lead and a negative electrode lead are connected to the obtained power generating element, and the power generating element is put inside a battery outer casing body such as an aluminum laminate film and vacuum-sealed. Thus, the all-solid state battery according to the present embodiment can be produced. Incidentally, a negative electrode active material layer may be provided between the solid electrolyte layer and the negative electrode current collector as necessary.

Although an embodiment of the all-solid state battery has been described above, the present invention is not limited to only the configuration described in the above-described embodiment, and can be appropriately changed based on the description of the claims.

Examples

Hereinafter, the present invention will be described in more detail with reference to Examples. However, the technical scope of the present invention is not limited only to the following Examples.

<<Production of positive electrode active material layer, solid electrolyte layer, and test cell>>

(Production of positive electrode active material layer)

[Comparative Example 1]

As constituent materials of a positive electrode active material layer, an NMC composite oxide (Li-Ni$_{0.8}$Mn$_{0.1}$Co$_{0.1}$O$_2$) as a positive electrode active material, an aldirodite type solid electrolyte (Li$_6$PS$_5$Cl, average particle diameter (D50) 0.8 $\mu$m) as a lithium ion conductive halogen-containing sulfide solid electrolyte, vapor grown carbon fibers (VGCFs) as a fibrous conductive aid, and polytetrafluoroethylene (PTFE) as a binder capable of being fibrillated were prepared. In a glove box in an argon atmosphere with a dew point of -68°C or lower, the NMC composite oxide, the solid electrolyte, the binder (PTFE), and the fibrous conductive aid (VGCFs) were weighed so that the mass ratio was 78.8 : 15.3 : 2.9 : 3.0, mixed in an agate mortar, and then further mixed and stirred in a planetary ball mill. Thus, the binder (PTFE) was fibrillated to obtain a powder composition (positive electrode mixture). After confirming that PTFE was fibrillated and formed into a fibrous shape, the obtained powder composition (positive electrode mixture) was supplied to a powder inlet set in a roll press machine. Then, a rolling treatment was performed on the powder composition using the roll press machine (conditions are shown below) to form the powder composition into a sheet shape, thus producing a positive electrode active material layer of Comparative Example 1. The content of the binder in the positive electrode active material layer was 2.9% by mass, and the content of the conductive aid was 3.0% by mass.

(Conditions of roll press machine)

- Roll size: 250 mm$\varphi$ $\times$ 400 mm
- Roll rotation speed: 1 m/min
- Pressure: 10 kN (linear pressure: 25 kN/m).

[Positive electrode active material layer of Comparative Example 2]

A positive electrode active material layer of Comparative Example 2 was obtained in the same manner as in Comparative Example 1 except that the content of the binder in the positive electrode active material layer was 3.3% by mass.

[Positive electrode active material layer of Comparative Example 3]

A positive electrode active material layer of Comparative Example 3 was produced in the same manner as in Comparative Example 1 except that the content of the binder in the positive electrode active material layer was 0.5% by mass.

[Positive electrode active material layer of Comparative Example 4]

A positive electrode active material layer of Comparative Example 4 was produced in the same manner except that a positive electrode active material layer was obtained in the same manner as in Comparative Example 1, the positive electrode active material layer was folded into two, and a rolling treatment of compressing the folded positive electrode active material layer using a roll press machine was performed twice. Here, the second and subsequent rolling treatments were performed by setting the gap between the rolls to be half or less of the thickness of the powder composition to be supplied and compressing the powder composition (the same applies hereinafter).

[Positive electrode active material layer of Example 1]

A positive electrode active material layer of Example 1 was produced in the same manner except that the positive electrode active material layer produced by the method of Comparative Example 4 was further folded into two, and a rolling treatment of compressing the folded positive electrode active material layer using a roll press machine was performed twice.

[Positive electrode active material layer of Example 2]

A positive electrode active material layer of Example 1 was produced in the same manner except that a positive electrode active material layer was obtained in the same manner as in Comparative Example 1, the positive electrode active material layer was folded into three, and a rolling treatment of compressing the folded positive electrode active material layer using a roll press machine was performed four times.

[Positive electrode active material layer of Example 3]

A positive electrode active material layer of Example 3 was produced in the same manner except that the positive electrode active material layer obtained by the method of Example 2 was further folded into three, and a rolling treatment of compressing the folded positive electrode active material layer using a roll press machine was performed once.

[Positive electrode active material layer of Example 4]

A positive electrode active material layer was produced in the same manner as in Comparative Example 1 except that carbon black (CB) was used as the conductive aid. Subsequently, the positive electrode active material layer was folded into three, a rolling treatment of compressing the folded positive electrode active material layer using a roll press machine four times, the positive electrode active material layer was further folded into four, and a rolling treatment of compressing the folded positive electrode active material layer using a roll press twice to produce a positive electrode active material layer of Example 4.

(Production of solid electrolyte layer)

An aldirodite type solid electrolyte ($Li_6PS_5Cl$, average particle diameter (D50) 3 $\mu$m) as a lithium ion conductive halogen-containing sulfide solid electrolyte and polyvinylidene fluoride (PVdF) as a binder were mixed at a mass ratio of 95 : 5, and an appropriate amount of butyl acetate was added as a solvent and mixed to prepare a solid electrolyte slurry. The solid electrolyte slurry prepared above was applied to one surface of a steel use stainless (SUS430LX) foil (thickness: 10 $\mu$m) as a negative electrode current collector and dried to form a solid electrolyte layer (weight per unit area: 3.7 mg/cm$^2$, thickness after pressing: 20 $\mu$m). Thus, a laminate of the solid electrolyte layer and the negative electrode current collector was obtained.

(Production of test cell)

An aluminum foil (thickness: 20 $\mu$m) as a positive electrode current collector, the positive electrode active material layer of Comparative Examples 1 to 4 and Examples 1 to 4 produced above, and the laminate of the solid electrolyte layer and the negative electrode current collector produced above were overlaid in the order of positive electrode current collector/positive electrode active material layer/solid electrolyte layer/negative electrode current collector, and then bonded together by hydrostatic pressure (700 MPa, 25°C, 1 min) to obtain a laminate of positive electrode current collector/positive electrode active material layer/solid electrolyte layer/negative electrode current collector. Next, a positive electrode lead and a negative electrode lead were connected to the obtained laminate, and the laminate was put inside an aluminum laminate film and vacuum-sealed to produce test cells of Comparative Examples 1 to 4 and Examples 1 to 4.

<<Evaluation of positive electrode active material layer>>

(Evaluation of orientation rate of binder)

The cross section of the positive electrode active material layer obtained in Comparative Examples 1 to 4 and Examples 1 to 4 described above was observed, and an orientation rate of the binder for a direction perpendicular to a laminating direction of the test cell (surface direction) was calculated.

First, the cross section of the positive electrode active material layer of Comparative Examples 1 to 4 and Examples 1 to 4 was exposed, and for the cross section of the positive electrode active material layer, the state of disposition of the binder in the cross section was specified using SEM-EDX. Specifically, the state of disposition of the binder was specified by observing the cross section by SEM-EDX and mapping an element specific to the binder (here, a fluorine (F) element). As the SEM (scanning electron microscope), Regulus8230 manufactured by Hitachi High-Tech Corporation was used, and as the EDX (energy dispersive X-ray analyzer), Ultim (registered trademark) Extreme manufactured by Oxford Instruments was used.

Subsequently, the obtained mapping data was input to an image processing apparatus, and 100 or more binders were extracted from all binders included in the observation image of the cross section. Then, for each of the extracted binders, as shown in Fig. 4, lengths of a vertical side and a horizontal side of a rectangle in which the binder is inscribed were measured, and an aspect ratio (length of the horizontal side/length of the vertical side; $1/\tan\theta$) was calculated. Then, an average value of the aspect ratios of the respective binders was calculated and used as an average value of the aspect ratios of the binders. The results are shown in Table 1.

Subsequently, $\theta$ [°] was calculated from the obtained value of the average value ($1/\tan\theta$) of the aspect ratios of the binders, and the orientation rate (%) of the binder was further calculated based on the following Formula 1. The results are shown in Table 1.

[Mathematical formula 2]

$$\text{Orientation rate (\%)} = (1 - \theta/90) \times 100 \quad \cdots \quad \text{(Formula 1)}$$

(Evaluation of orientation rate of conductive aid)

The cross section of the positive electrode active material layer obtained in Comparative Examples 1 to 4 and Examples 1 to 4 described above was observed, and an orientation rate of the conductive aid for a direction perpendicular to a laminating direction of the test cell (surface direction) was calculated.

First, the cross section of the positive electrode active material layer of Comparative Examples 1 to 4 and Examples 1 to 4 was exposed, and for the cross section of the positive electrode active material layer, the state of disposition of the binder in the cross section was specified using SEM-EDX. Specifically, the cross section was observed by SEM-EDX, an element constituting the conductive aid (here, a carbon (C) element) was mapped, and the state of disposition of the conductive aid was specified from a difference from the mapping result of the binder.

Subsequently, the obtained mapping data was input to an image processing apparatus, and 100 or more binders were extracted from all binders included in the observation image of the cross section. Then, for each of the extracted conductive aids, as shown in Fig. 4, lengths of a vertical side and a horizontal side of a rectangle in which the conductive aid is inscribed were measured, and an aspect ratio (length of the horizontal side/length of the vertical side; $1/\tan\theta$) was calculated. Then, an average value of the aspect ratios of the respective conductive aids was calculated and used as an average value of the aspect ratios of the conductive aids. The results are shown in Table 1.

Subsequently, $\theta$ [°] was calculated from the obtained value of the average value ($1/\tan\theta$) of the aspect ratios, and the orientation rate (%) of the conductive aid was further calculated based on Formula 1 described above. The results are shown in Table 1.

(Tensile test of positive electrode active material layer)

Measurement of a tensile elastic modulus was performed according to JIS K7161:2014 using a tensile tester. As a sample, one obtained by punching the positive electrode active material layer obtained in Comparative Examples 1 to 4 and Examples 1 to 4 into a dumbbell shape was used. With a test speed of 1 mm/ and with the above surface direction as a tensile direction, the test was performed at until the test piece was cut. Regarding the results, the results are shown in Table 1 as values obtained by dividing the test results of each of Comparative Examples and Examples by the test result of Comparative Example 1.

<<Evaluation of test cell>>

(Performance evaluation of test cell)

Cycle durability of the test cells of Comparative Examples 1 to 4 and Examples 1 to 4 produced above was evaluated by the following cycle test in a constant temperature thermostatic bath set at 25°C using an electrochemical diagnostic apparatus (VSP-300 manufactured by Bio-Logic Science Instruments).

The test cell was fully charged under the condition of a cut-off current of 0.01 C by 0.05 C-3.1 V constant current constant voltage charge at 25°C, and then discharged at 0.05 C at a cut-off voltage of 1.1 V. Then, as a percentage of the discharge capacity at the 50th cycle to the discharge capacity at the first cycle, the discharge capacity retention rate [%] at the 50th cycle was calculated. The results shown in Table 1 are values obtained by dividing the discharge capacity retention rates of Comparative Example 2 and Examples 1 to 4 by the discharge capacity retention rate of Comparative Example 2. Incidentally, in Comparative Examples 1, 2, and 4, a short circuit occurred before the 50th cycle.

(Evaluation of cracks in positive electrode active material layer)

After the above cycle test, the test cells of Comparative Examples 1 to 4 and Examples 1 to 4 were disassembled, and the presence or absence of cracks in the positive electrode active material layer was visually confirmed. The results are shown in Table 1.

[Table 1]

| | Binder | | | | Conductive aid | | | | Evaluation | | |
|---|---|---|---|---|---|---|---|---|---|---|---|
| | Content (% by mass) | Average value of aspect ratios | θ (°) | Orientation rate (%) | Type | Average value of aspect ratios | θ (°) | Orientation rate (%) | Tensile test | Cracks | Performance |
| Comparative Example 1 | 2.9 | 1.00 | 45.00 | 50.00 | VGCF | 1.00 | 45.00 | 50.00 | 1.00 | Present | Unevaluable |
| Comparative Example 2 | 3.3 | 1.01 | 44.71 | 50.32 | VGCF | 1.00 | 45.00 | 50.00 | 1.10 | Absent | 1.00 |
| Comparative Example 3 | 0.5 | 1.11 | 42.02 | 53.31 | VGCF | 1.00 | 45.00 | 50.00 | 0.78 | Present | Unevaluable |
| Comparative Example 4 | 2.9 | 1.22 | 39.34 | 56.29 | VGCF | 1.08 | 42.80 | 52.45 | 1.00 | Present | Unevaluable |
| Example 1 | 2.9 | 1.50 | 33.69 | 62.57 | VGCF | 1.32 | 37.15 | 58.73 | 1.12 | Absent | 1.05 |
| Example 2 | 2.9 | 2.70 | 20.32 | 77.42 | VGCF | 1.56 | 32.66 | 63.71 | 1.21 | Absent | 1.16 |
| Example 3 | 2.9 | 4.26 | 13.21 | 85.32 | VGCF | 2.22 | 24.25 | 73.06 | 1.38 | Absent | 1.26 |
| Example 4 | 2.9 | 3.80 | 14.74 | 83.62 | CB | 2.20 | 24.44 | 72.84 | 1.20 | Absent | 1.09 |

The results were that in the positive electrode active material layers of Examples 1 to 4 in which the orientation rate of the binder was 60% or higher, the strength in the tensile test was superior to that in Comparative Examples 1 to 4 in which the orientation rate was lower than 60%. In addition, similarly, the results were that the test cells of Examples 1 to 4 exhibited performance superior to that of Comparative Examples 1 to 4 in the cycle test, and further there was no crack in the positive electrode active material layer after the cycle test.

Reference Signs List

10a     Laminate type battery

11'     Negative electrode current collector

11"     Positive electrode current collector

13      Negative electrode active material layer

15      Positive electrode active material layer

17      Solid electrolyte layer

19      Single battery layer

21      Power generating element

25      Negative electrode current collecting plate

27      Positive electrode current collecting plate

29      Laminate film

30      Binder

110     Roll

200     Base material

210     Base material conveyance unit

210a    Placement portion

210b    Drive portion

H       Vertical side

W       Horizontal side

**Claims**

1. An all-solid state battery comprising a power generating element including:

   a positive electrode including a positive electrode active material layer containing a positive electrode active material and a binder;
   a negative electrode; and
   a solid electrolyte layer containing a solid electrolyte and intervening the positive electrode and the negative electrode, wherein
   an orientation rate of the binder contained in the positive electrode active material layer for a direction perpendicular to a laminating direction of the power generating element is 60% or higher.

2. The all-solid state battery according to claim 1, wherein the orientation rate of the binder is 60% or higher and 90% or lower.

3. The all-solid state battery according to claim 1, wherein the orientation rate of the binder is 75% or higher and 90% or lower.

4. The all-solid state battery according to any one of claims 1 to 3, wherein a content of the binder in the positive electrode active material layer is 0.6% by mass or more and 3.2% by mass or less with respect to a total mass of the positive electrode active material layer.

5. The all-solid state battery according to any one of claims 1 to 3, wherein the binder includes a fibrous binder.

6. The all-solid state battery according to claim 5, wherein the fibrous binder includes one or two or more selected from the group consisting of polytetrafluoroethylene (PTFE), carboxymethyl cellulose, polyvinyl alcohol, polyethylene, nanofibers such as cellulose nanofibers, and Kevlar fibers.

7. The all-solid state battery according to any one of claims 1 to 3, wherein the positive electrode active material layer further contains a conductive aid.

8. The all-solid state battery according to claim 7, wherein an orientation rate of the conductive aid contained in the positive electrode active material layer for a direction perpendicular to a laminating direction of the power generating element is 55% or higher.

9. The all-solid state battery according to claim 7, wherein a shape of the conductive aid is a fibrous shape or a flat shape.

10. A method for producing a positive electrode active material layer for use in the all-solid state battery according to claim 1, the method comprising:
a forming step of supplying a powder composition containing the positive electrode active material and the binder to a roll press machine, and performing a rolling treatment twice or more on the powder composition using the roll press machine to form the powder composition into a sheet shape, thus obtaining the electrode active material layer.

Fig. 1

<u>10a</u>

Fig. 2

<u>10a</u>

Fig. 3

19

11"

15

30

17

11'

13

Fig. 4

30

H

W

Fig. 5

Fig. 6

## INTERNATIONAL SEARCH REPORT

International application No.

**PCT/IB2022/000285**

### A.    CLASSIFICATION OF SUBJECT MATTER

***H01M 10/0562***(2010.01)i; ***H01M 4/13***(2010.01)i; ***H01M 4/139***(2010.01)i; ***H01M 4/62***(2006.01)i; ***H01M 10/052***(2010.01)i
FI:    H01M10/0562; H01M10/052; H01M4/13; H01M4/139; H01M4/62 Z

According to International Patent Classification (IPC) or to both national classification and IPC

### B.    FIELDS SEARCHED

Minimum documentation searched (classification system followed by classification symbols)

H01M10/0562; H01M4/13; H01M4/139; H01M4/62; H01M10/052

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
|---|---|---|
| X | JP 2022-514039 A (FRAUNHOFER-GESELLSCHAFT ZUR FÖRDERUNG DER ANGEWANDTEN FORSCHUNG E.V) 09 February 2022 (2022-02-09) claims 1-13, paragraphs [0001]-[0049], fig. 1-16, in particular, paragraphs [0020]-[0023], [0031]-[0048], fig. 3 | 1-10 |
| Y | | 1-10 |
| Y | WO 2022/050251 A1 (DAIKIN IND LTD) 10 March 2022 (2022-03-10) claims 1-14, paragraphs [0001]-[0126], examples, fig. 1, in particular, examples 1-8 | 1-10 |
| E, X | JP 2022-103142 A (DAIKIN IND LTD) 07 July 2022 (2022-07-07) claims 1-15, paragraphs [0001]-[0140], examples, fig. 1, in particular, paragraphs [0130]-[0132], examples 1-11 | 1-10 |
| A | WO 2015/030230 A1 (NIHON GORE CO LTD) 05 March 2015 (2015-03-05) | 1-10 |
| A | JP 08-329962 A (JAPAN GORE TEX INC) 13 December 1996 (1996-12-13) | 1-10 |
| A | JP 2011-009203 A (NISSAN MOTOR CO LTD) 13 January 2011 (2011-01-13) | 1-10 |

☐ Further documents are listed in the continuation of Box C.    ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **05 September 2022** | **13 September 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/IB2022/000285**

| Patent document cited in search report | | | Publication date (day/month/year) | Patent family member(s) | | | Publication date (day/month/year) |
|---|---|---|---|---|---|---|---|
| JP | 2022-514039 | A | 09 February 2022 | US | 2022/0029242 | A1 | |
| | | | | claims 1-13, paragraphs [0001]-[0063], fig. 1-16, in particular, paragraphs [0019]-[0022], [0046]-[0062], fig. 3 | | | |
| | | | | WO | 2020/127223 | A2 | |
| | | | | EP | 3900075 | A2 | |
| | | | | DE | 102018222142 | A1 | |
| | | | | KR | 10-2021-0113995 | A | |
| WO | 2022/050251 | A1 | 10 March 2022 | (Family: none) | | | |
| JP | 2022-103142 | A | 07 July 2022 | WO | 2022/138942 | A1 | |
| | | | | claims 1-15, paragraphs [0001]-[0140], examples, fig. 1, in particular, paragraphs [0130]-[0132], examples 1-11 | | | |
| WO | 2015/030230 | A1 | 05 March 2015 | KR | 10-2016-0032245 | A | |
| | | | | EP | 3043402 | A1 | |
| | | | | US | 2016/0204476 | A1 | |
| | | | | CN | 105794018 | A | |
| JP | 08-329962 | A | 13 December 1996 | EP | 718903 | A1 | |
| | | | | US | 6054230 | A | |
| JP | 2011-009203 | A | 13 January 2011 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019021459 A